(19) Europäisches Patentamt
European Patent Office
Office européen des brevets

(11) **EP 2 177 917 B1**

(12) **EUROPEAN PATENT SPECIFICATION**

(45) Date of publication and mention
of the grant of the patent:
**06.11.2013 Bulletin 2013/45**

(51) Int Cl.:
**G01P 3/489** (2006.01)          **H02K 29/14** (2006.01)
**H02P 6/16** (2006.01)

(21) Application number: **08830090.0**

(22) Date of filing: **26.08.2008**

(86) International application number:
**PCT/JP2008/065144**

(87) International publication number:
**WO 2009/034829 (19.03.2009 Gazette 2009/12)**

(54) **VELOCITY DETECTION METHOD AND MOTOR CONTROL DEVICE USING THE METHOD**

GESCHWINDIGKEITSERKENNUNGSVERFAHREN SOWIE VORRICHTUNG ZUR
MOTORENSTEUERUNG UNTER ANWENDUNG DIESES VERFAHRENS

PROCÉDÉ DE DÉTECTION DE VITESSE ET DISPOSITIF DE COMMANDE DE MOTEUR UTILISANT
LE PROCÉDÉ

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **11.09.2007  JP 2007234909**

(43) Date of publication of application:
**21.04.2010  Bulletin 2010/16**

(73) Proprietor: **Kabushiki Kaisha Yaskawa Denki
Kitakyushu-shi, Fukuoka 806-0004 (JP)**

(72) Inventors:
• **ZHANG, Wennong
Kitakyushu-Shi
806-0004 Fukuoka**

  **(JP)**
• **TAKEI Yasuyuki
Kitakyushu-Shi
806-0004 Fukuoka (JP)**

• **NAKAMURA Hiroshi
Kitakyushu-Shi
806-0004 Fukuoka (JP)**

(74) Representative: **Gendron, Vincent Christian et al
Fédit-Loriot
38, avenue Hoche
75008 Paris (FR)**

(56) References cited:
**EP-A2- 0 476 478     DE-A1- 3 234 575
JP-A- 05 215 758     JP-A- 62 266 468
US-A- 4 257 005     US-A- 4 992 730**

• **PAMELA BHATTI ET AL: "Single-Chip Velocity
Measurement System for Incremental Optical
Encoders", IEEE TRANSACTIONS ON CONTROL
SYSTEMS TECHNOLOGY, IEEE SERVICE
CENTER, NEW YORK, NY, US, vol. 5, no. 6, 1
November 1997 (1997-11-01), XP011013849,
ISSN: 1063-6536**

**Description**

Technical Field

The present invention relates to a method of detecting the velocity of a motor on the basis of the output from an encoder attached to the motor in servomotor feedback control.

Background Art

Normally, to detect the velocity of a rotary body such as a motor, a pulse counting method is used which reads the counter value of a position pulse signal every predetermined sampling period, calculates the count difference between the current counter value thus read and the previous counter value, and divides the count difference by the sampling period to obtain the velocity. In an attempt to increase the velocity resolution, a high-resolution pulse generation circuit is required. Further, there is also a problem in that, if a pulse generation circuit including a tracking circuit is used, and if the velocity calculation sampling period is not equal to an integral multiple of the tracking sampling period, the beat phenomenon occurs to increase the ripple of the detected velocity.

EP 0 476 478 A2 discloses a digital pulse processing device including a counter for counting pulses output from a pulse generator, comprising a counter group including at least one counter and a coupling control means for changing over the operation of the counter group between the operation of the sole counter and that of the plurality of counters in a coupled state.

Likewise, DE 32 34 575 A1 discloses a known method for determining the rotation speed of a motor, and two measurement techniques, i.e. a pulse counting method and a type of period measurement technique.

Further, US 4 257 005 A discloses a period measurement technique.

Conventionally, to increase the resolution of the velocity detection, the detection of the velocity has been performed by a velocity detection device illustrated in Fig. 2 on the basis of velocity calculation using a period measurement method (see Patent Document 1, for example).

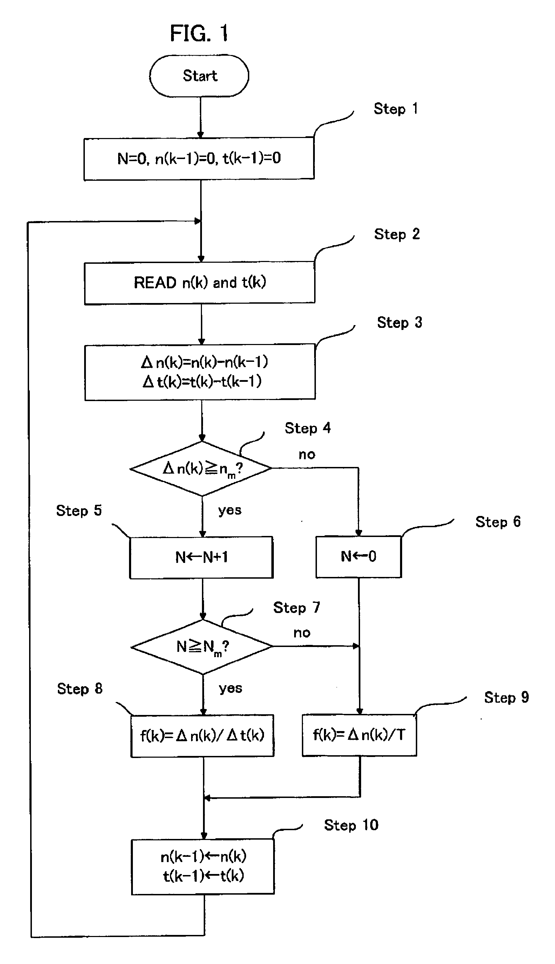

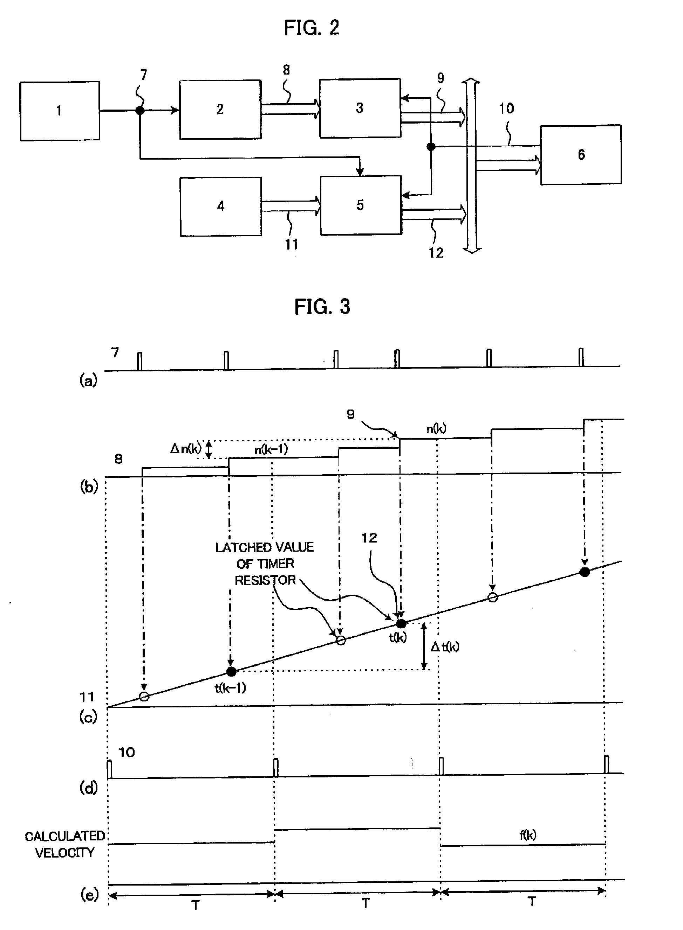

In Fig. 2, 1 represents a pulse generation circuit which outputs a position pulse signal 7, 2 represents a counter which measures the ups and downs of the position pulse signal 7, 3 represents a position register which temporarily stores the value of the counter 2, 4 represents a timer, 5 represents a timer register which latches the value of the timer 4 in accordance with the position pulse signal 7, and 6 represents a velocity calculator which calculates the velocity by emitting a read-enable signal 10 to read a position pulse value from the position register 3 and the latched timer value from the timer register 5.

An operation will now be described. Fig. 3 is a time chart illustrating the period measurement method. In Fig. 3, (a) represents the position pulse signal 7 as the output from the pulse generation circuit 1, (b) represents a counter value 8 of the ups and downs of the position pulse signal 7 measured by the counter 2, and (c) represents a timer value 11 as the output from the timer 4. Further, the timer value 11 obtained at the timing of a change in the counter value 8 corresponds to the latched value of the timer register 5. Further, (d) represents the read-enable signal 10 emitted by the velocity calculator 6, and (e) represents the calculated velocity obtained by the velocity calculator 6. At a time point at which the read-enable signal 10 is enabled, the value of the position register 3 is read and set as a current position pulse value n(k), and the value of the timer register is read and set as a current timer value t(k). On the basis of the arithmetic expressions presented in formulae (1) to (3), a pulse change value $\Delta n(k)$ as the difference between the current position pulse value and the previous position pulse value and a timer change value $\Delta t(k)$ as the difference between the current timer value and the previous timer value are obtained, and a position pulse frequency f(k) is calculated to obtain the velocity of a motor.

$$\Delta n(k) = n(k) - n(k-1) \qquad (1)$$

$$\Delta t(k) = t(k) - t(k-1) \qquad (2)$$

$$f(k) = \Delta n(k) / \Delta t(k) \qquad (3)$$

As understood from Fig. 3, the timer change value $\Delta t(k)$ accurately represents the time during which the motor is displaced by the pulse change value $\Delta n(k)$. Therefore, the beat phenomenon does not occur in the thus obtained velocity of the motor, and the velocity is highly accurate and has a small ripple.

[Patent Document 1] Japanese Unexamined Patent Application Publication No. 5-215758 (Pages 2 to 4 and Fig. 1)

Disclosure of Invention

Problems to be Solved by the Invention

The conventional velocity detection method follows the procedure of storing the times of changes in the position pulse signal and dividing the pulse change value by the timer change value to obtain the velocity. Therefore, there is a problem in that the absence of displacement of one pulse during one sampling period increases the timer change to be equal to or greater than one sampling period and increases the velocity detection time, to thereby prevent an increase in control gain and deteriorate control performance. Further, there is another problem in that, if there is a large amount of noise in the pulse generation circuit, noise appears before and after the time of enabling of the read-enable signal and causes the timer change value to be apparently reduced, and a calculated velocity value abnormally greater than the actual velocity is output to cause vibration in the motor through feedback control.
The present invention has been made in view of the above-described problems, and it is an object of the present invention to provide a velocity detection method capable of detecting a highly accurate and low-ripple velocity in a high-velocity region and calculating the velocity without deteriorating the control performance even when there is a large amount of noise in a low-velocity region.

Means for Solving the Problems

To solve the above problems, the present invention provides the following method and configuration.
According to an invention of a velocity detection method described in Claim 1, a velocity detection method uses a velocity detection device including a pulse generation circuit for outputting a position pulse, a counter for counting the position pulse, a position register for storing position information by latching the value of the counter, a timer, a timer register for storing the value of the timer on the basis of the up and down of the position pulse, and a velocity calculator for calculating the velocity by emitting a read-enable signal to read a position pulse value from the position register and a timer value from the timer register.
The velocity detection method performs velocity calculation processing in accordance with a procedure including:

setting zero as a multi-pulse succession number representing the number by which a pulse change value during one sampling period successively reaches or exceeds a predetermined pulse change threshold value, a previous position pulse value, and a previous timer value;
reading a current position pulse value from the position register and a current timer value from the timer register in accordance with the emission of the read-enable signal by the velocity calculator;
setting the pulse change value as the value obtained by subtracting the previous position pulse value from the current position pulse value;
setting a timer change value as the value obtained by subtracting the previous timer value from the current timer value;
comparing the pulse change value with the pulse change threshold value;
incrementing, when the pulse change value is equal to or greater than the pulse change threshold value, the multi-pulse succession number by one to set a new multi-pulse succession number, comparing the multi-pulse succession number with a multi-pulse succession number threshold value, which is a natural number equal to or greater than two, and dividing, when the multi-pulse succession number is equal to or greater than the multi-pulse succession number threshold value, the pulse change value by the timer change value to calculate a position pulse frequency;
dividing, when the multi-pulse succession number is smaller than the multi-pulse succession number threshold value, the pulse change value by the sampling period to calculate the position pulse frequency;
setting, when the pulse change value is smaller than the pulse change threshold value, zero as the multi-pulse succession number, and dividing the pulse change value by the sampling period to calculate the position pulse frequency; and
setting the previous position pulse value to the current position pulse value, and setting the previous timer value to the current timer value.

According to an invention described in Claim 2, in the velocity detection method described in Claim 1, the pulse change threshold value is a natural number equal to or greater than two.
According to an invention of a motor control device described in Claim 3, a motor control device includes a pulse generation circuit for outputting a position pulse, a counter for counting the position pulse, a position register for storing position information by latching the value of the counter, a timer, a timer register for storing the value of the timer on the basis of the up and down of the position pulse, and a velocity calculator for calculating the velocity by emitting a read-enable signal to read a position pulse value from the position register and a timer value from the timer register. In the motor control device the velocity calculator sets zero as a multi-pulse succession number representing the number by which a pulse change value during one sampling period successively reaches or exceeds a predetermined pulse change threshold value, a previous position pulse value, and a previous timer value; reads a current position pulse value from the position register and a current timer value from the timer register in accordance with the emission of the read-enable signal by the velocity calculator; sets the pulse change value as the value obtained by subtracting the previous position pulse value from the current position pulse value; sets a timer change value as the value obtained by subtracting the previous timer value from the current timer value; compares the pulse change value with the pulse change threshold value; increments, when the pulse change value is equal to or greater than the pulse change threshold value, the multi-pulse succession number by one to set a new multi-pulse succession number, compares the multi-pulse succession number with a multi-pulse succession number threshold value, which is a natural number equal to or greater than two, and divides, when the multi-pulse succession number is equal to or greater than the multi-pulse succession number threshold value, the pulse change value by the timer change value to calculate a position pulse frequency; divides, when the multi-pulse succession number is smaller than the multi-pulse succession number threshold value, the pulse change value by the sampling period to calculate the position pulse frequency; sets, when the pulse change value is smaller than the pulse change threshold value, zero as the multi-pulse succession number, and divides the pulse change value by the sampling period to calculate the position pulse frequency; and sets the previous position pulse value to the current position pulse value, and sets the previous timer value to the current timer value.

According to an invention described in Claim 4, in the motor control device described in Claim 3, the pulse change threshold value is a natural number equal to or greater than two.

Advantages

In a high-velocity operation, the velocity is detected by the use of the period measurement method. Therefore, the timer change value for measuring the period of the position pulse accurately represents the time of displacement of the motor. Accordingly, the beat phenomenon does not occur, and the detected velocity is highly accurate and has a small ripple. Meanwhile, in a low-velocity operation, the velocity is detected by the use of the pulse counting method. Therefore, the detection time is always equal to one sampling period. Accordingly, the method is resistant to noise, and does not cause the problem of deterioration of the control performance due to a phase delay. Further, in an intermediate-velocity operation, the pulse counting method and the period measurement method are alternately used. With an increase in the multi-pulse succession number threshold value $N_m$, the error between the average value of the detected velocities and the actual velocity is reduced.

With the velocity detection method thus selectively switched in accordance with the high-velocity, intermediate-velocity, and low-velocity operation regions, it is possible to provide a motor control device of higher accuracy and performance and a lower ripple.

Brief Description of Drawings

[Fig. 1] Fig. 1 is a flowchart illustrating a process procedure of a velocity detection method according to the present invention.
[Fig. 2] Fig. 2 is a block diagram illustrating a configuration of a conventional velocity detection device.
[Fig. 3] Fig. 3 is a time chart illustrating a conventional period measurement method.
[Fig. 4] Fig. 4 illustrates comparison between a detected velocity according to a period measurement method and a detected velocity according to a pulse counting method in a high-velocity operation in the present invention.
[Fig. 5] Fig. 5 illustrates a detected velocity according to the pulse counting method in a low-velocity operation in the present invention.
[Fig. 6] Fig. 6 illustrates a detected velocity in an intermediate-velocity operation in the present invention (when $n_m=2$ and $N_m=2$).
[Fig. 7] Fig. 7 illustrates a detected velocity in an intermediate-velocity operation in the present invention (when $n_m=2$ and $N_m=4$)

Reference Numerals

1 pulse generation circuit
2 counter
3 position register
4 timer
5 timer register
6 velocity calculator
7 position pulse signal
8 counter value
9 output value of position register
10 read-enable signal
11 timer value
12 output value of timer register

Best Mode for Carrying Out the Invention

A specific example of a velocity detection method according to the present invention will be described below with reference to the drawings.

EXAMPLE

A configuration of a velocity detection device for carrying out a method according to the present invention is the same as that of the conventional technique illustrated in Fig. 2. Fig. 1 is a flowchart illustrating a process procedure of a velocity detection method according to the present invention performed in the velocity detention device of Fig. 2. The method according to the present invention  will be sequentially described below with reference to Fig. 1.

Firstly, at Step 1, a multi-pulse succession number N representing the number by which the pulse change value successively reaches or exceeds a pulse change threshold value $n_m$ (natural number equal to or greater than two), a previous position pulse value n(k-1), and a previous timer value t(k-1) are all set to be zero to perform an initialization process.

Then, at Step 2, the velocity calculator 6 emits the read-enable signal 10 to read the current position pulse value n(k) from the position register 3 and the current timer value t(k) from the timer register 5.

At Step 3, the pulse change value $\Delta n(k)$ and the timer change value $\Delta t(k)$ are obtained in a similar manner as in the conventional technique, as expressed in the formulae (1) and (2).

At Step 4, whether or not $\Delta n(k)$ is equal to or greater than $n_m$ is determined. If so, the procedure advances to Step 5. If not, the procedure advances to Step 6.

At Step 5, the multi-pulse succession number N is incremented by one to set a new multi-pulse succession number N, and the procedure advances to Step 7.

At Step 6, the multi-pulse succession number N is set to be zero, and the procedure advances to Step 9.

At Step 7, whether or not the multi-pulse succession number N is equal to or greater than the multi-pulse succession number threshold value $N_m$ is determined. If so, the procedure advances to Step 8. If not, the procedure advances to Step 9.

At Step 8, the pulse change value $\Delta n(k)$ is divided by the timer change value $\Delta t(k)$, as in the formula (3), to calculate the position pulse frequency f(k) and obtain the  velocity of the motor.

Further, at Step 9, the pulse change value $\Delta n(k)$ is divided by a sampling period T, as in the formula (4), to calculate the position pulse frequency f(k) and obtain the velocity of the motor.

$$f(k) = \Delta n(k) / T \qquad\qquad\qquad (4)$$

Finally, at Step 10, the pervious position pulse value n(k-1) is set to the current position pulse value n(k), and the pervious timer value t(k-1) is set to the current timer value t(k). Then, the procedure returns to Step 2.

As described above, the velocity of the motor is calculated by the use of the period measurement method in the case in which the actual displacement amount during one sampling period successively reaches or exceeds the pulse $n_m$ the $N_m$ times, and the velocity of the motor is calculated by the use of the pulse counting method in other cases. That is, in the high-velocity operation (when the actual displacement amount during one sampling period is always equal to or greater than the pulse $n_m$), the velocity is detected by the use of the period measurement method. Therefore, the beat phenomenon does not occur, and the detected velocity is highly accurate and has a small ripple.

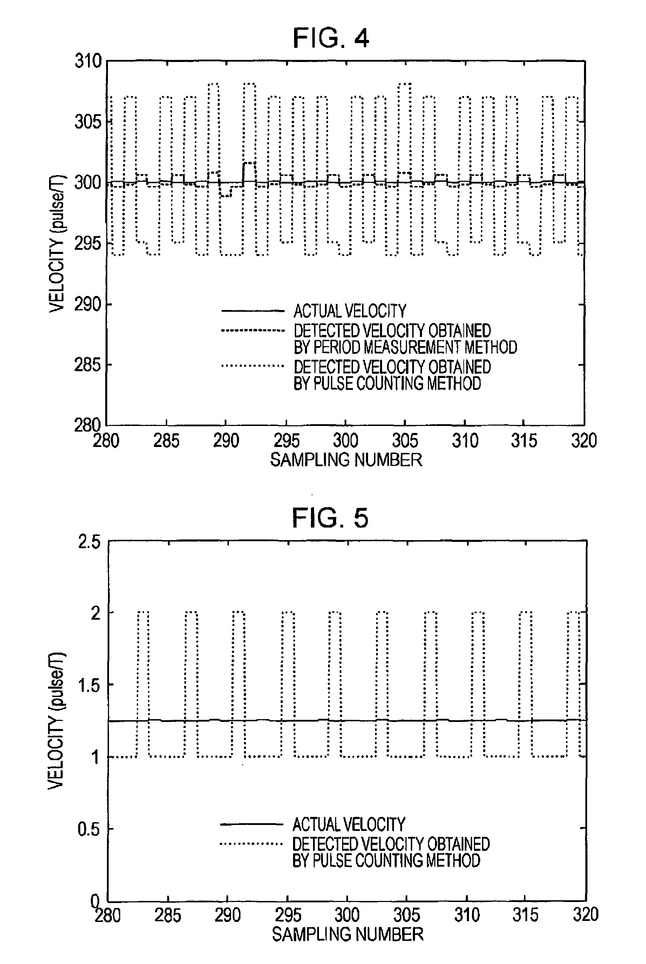

Fig. 4 illustrates simulation results of the detected velocity with the horizontal axis representing the time axis normalized with the sampling period T and the vertical axis representing the value normalized with the number of pulses per sampling period T (corresponding to $\Delta n(k)/T$). The velocity ripple in the period measurement method (dashed line) is suppressed to one tenth or less of that in the pulse counting method (dotted line), and is substantially reduced.

Meanwhile, in the low-velocity operation, i.e., when the actual displacement amount during one sampling period is always smaller than a pulse $[n_m-(1/N_m)]$, the multi-pulse succession number N does not reach or exceed the multi-pulse succession number threshold value $N_m$. Therefore, the velocity detection is performed with the use of the pulse counting method (see Fig. 5). In this case, the error between the detected velocity and the actual velocity is increased every calculation period. However, the average value of the detected velocities in a little longer time span is substantially equal to the actual velocity. The detection time is always equal to one sampling period. Therefore, the method is resistant to noise, and does not cause the problem of deterioration of the control performance due to the phase delay. Although the beat phenomenon occurs, the ripple amplitude due to the beats is proportional to the velocity. Therefore, the ripple amplitude is small at a low velocity, and does not cause an adverse effect.

Further, the value of $n_m$ is determined by the noise environment. When the noise is small, $n_m$ is desired to be set as small as possible to increase the accuracy of the velocity calculation and reduce the ripple also in the low-velocity operation.

Further, in the intermediate-velocity operation, i.e., when the actual displacement amount during one sampling period is equal to or greater than the pulse $[n_m-(1/N_m)]$ and smaller than the pulse $n_m$, the multi-pulse succession number N exceeds and falls below the multi-pulse succession number threshold value $N_m$. In the detection of the velocity, therefore, the pulse counting method and the period measurement method are alternately switched. Accordingly, when the motor operates at a constant intermediate velocity, an average value $V_{Ave}$ of the detected velocities has an error from an actual velocity $V_{Motor}$. The reason therefor will be described below.

If the calculation method is not switched and the velocity is always detected by the use of the pulse counting method, a velocity $V_{High}$ calculated with the pulse change value of $n_m$ is higher than the actual velocity $V_{Motor}$, and a velocity $V_{Low}$ calculated with the pulse change value of $(n_m-1)$ is lower than the actual velocity. However, the average value $V_{Ave}$ of the detected velocities is equal to the actual velocity $V_{Motor}$.

In the velocity detection method according to the present invention, when the multi-pulse succession number N is equal to or greater than the multi-pulse succession number threshold value $N_m$, the velocity is detected by the use of the period measurement method. Therefore, the detected velocity according to the method is a value equal to the actual velocity $V_{Motor}$ at that time but smaller than the value $V_{High}$ calculated with the use of the pulse counting method. Accordingly, the average value $V_{Ave}$ of the detected velocities is smaller than the actual velocity $V_{Motor}$.

As for the above-described issue of the error in the intermediate-velocity operation, it is possible to reduce the influence of the error by increasing the multi-pulse succession number threshold value $N_m$. That is, if $N_m$ is increased, the number of uses of the period measurement method within a predetermined time is reduced. Therefore, the error between the average value of the detected velocities and the actual velocity is also reduced. If $N_m$ is increased, however, the ripple due to the beats, which is the problem inherent to the pulse counting method, is increased. Therefore, the value $N_m$ needs to be determined in accordance with the required characteristics of a drive system in consideration of the trade-off between the error and the ripple.

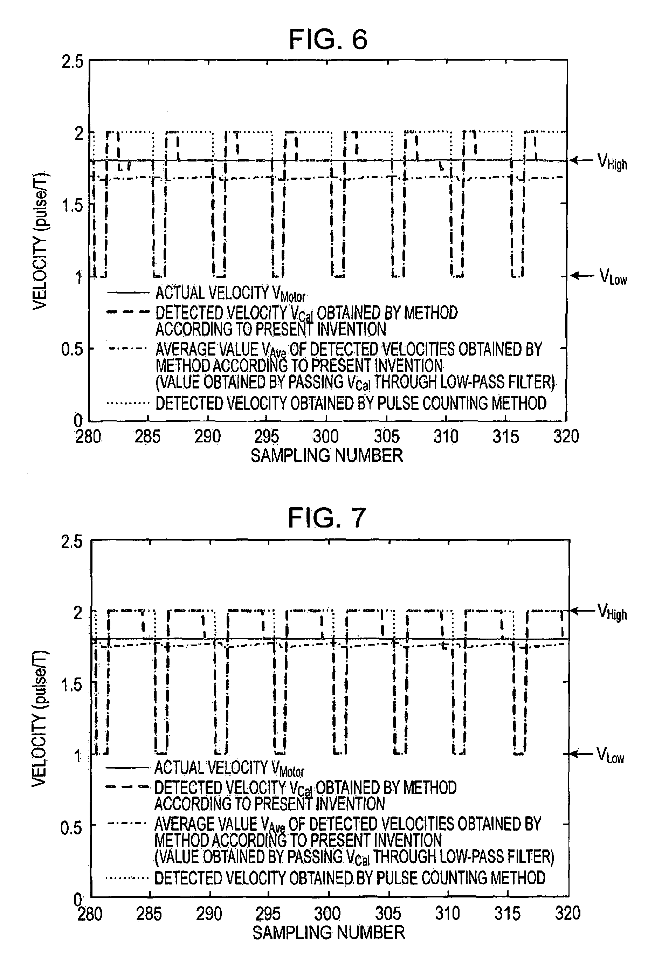

Fig. 6 illustrates by simulation the state in which the detected velocity alternately switches between the pulse counting method and the period measurement method in the intermediate-velocity operation. The dashed line indicates the detected velocity according to the velocity detection method of the present invention, and the dotted line indicates the detected velocity for comparison according to the pulse counting method. Further, the dash-dotted line indicates the average value of the detected velocities of the present invention obtained through a low-pass filter. In Fig. 6, $n_m=2$ and $N_m=2$ hold.

According to the present simulation results, during the time in which the method is switched to the period measurement method, the value of the detected velocity according to the method is substantially equal to the actual velocity, but the average value of all detected velocities including the detected values according to the pulse counting method is lower than the actual velocity.

Further, Fig. 7 illustrates a case in which $n_m=2$ is maintained and $N_m$ is changed from 2 to 4 in the simulation condition. In this case, the number of uses of the period measurement method within a predetermined time is reduced, as described above. Therefore, it is understood that the difference in the average value of the detected velocities from the actual velocity (solid line) is smaller than that of Fig. 6.

Applied as a velocity feedback signal of a motor control device having position control and velocity control functions, the present invention can provide a motor control device of higher accuracy and performance and a lower ripple.

Industrial Applicability

The present invention can highly accurately detect a velocity signal, which is a differential of a position signal, by switching between the pulse counting method and the period measurement method in accordance with the operation velocity on the basis of the counter value of the position pulse signal and the timer value of the position pulse signal.

Therefore, the present invention can be widely used in position and velocity control devices in fields requiring highly accurate and high-speed response control and other general industrial fields, such as robots, machine tools, and semiconductor manufacturing devices.

**Claims**

1. A velocity detection method using a velocity detection device including a pulse generation circuit (1) for outputting a position pulse, a counter (2) for counting the position pulse, a position register (3) for storing position information by latching the value of the counter (2), a timer (4), a timer register (5) for storing the value of the timer (4) on the basis of the up and down of the position pulse, and a velocity calculator (6) for calculating the velocity by emitting a read-enable signal (10) to read a position pulse value (8) from the position register (3) and a timer value (11) from the timer register (5), the velocity detection method performing velocity calculation processing in accordance with a procedure comprising:

   setting zero as a multi-pulse succession number representing the number by which a pulse change value during one sampling period successively reaches or exceeds a predetermined pulse change threshold value, a previous position pulse value, and a previous timer value;
   reading a current position pulse value from the position register and a current timer value from the timer register in accordance with the emission of the read-enable signal by the velocity calculator;
   setting the pulse change value as the value obtained by subtracting the previous position pulse value from the current position pulse value;
   setting a timer change value as the value obtained by subtracting the previous timer value from the current timer value;
   comparing the pulse change value with the pulse change threshold value, the procedure **characterized by** further comprising:

   incrementing, when the pulse change value is equal to or greater than the pulse change threshold value, the multi-pulse succession number by one to set a new multi-pulse succession number, comparing the multi-pulse succession number with a multi-pulse succession number threshold value which is a natural number equal to or greater than two, and dividing, when the multi-pulse succession number is equal to or greater than the multi-pulse succession number threshold value, the pulse change value by the timer change value to calculate a position pulse frequency;
   dividing, when the multi-pulse succession number is smaller than the multi-pulse succession number threshold value, the pulse change value by the sampling period to calculate the position pulse frequency;
   setting, when the pulse change value is smaller than the pulse change threshold value, zero as the multi-pulse succession number, and dividing the pulse change value by the sampling period to calculate the position pulse frequency; and
   setting the previous position pulse value to the current position pulse value, and setting the previous timer value to the current timer value.

2. The velocity detection method described in Claim 1,
   wherein the pulse change threshold value is a natural number equal to or greater than two.

3. A motor control device comprising a pulse generation circuit (1) for outputting a position pulse, a counter (2) for counting the position pulse, a position register (3) for storing position information by latching the value of the counter (2), a timer (4), a timer register (5) for storing the value of the timer (4) on the basis of the up and down of the position pulse, and a velocity calculator (6) for calculating the velocity by emitting a read-enable signal (10) to read a position pulse value (8) from the position register (3) and a timer value (11) from the timer register (5),
   wherein the velocity calculator (6) sets zero as a multi-pulse succession number representing the number by which a pulse change value during one sampling period successively reaches or exceeds a predetermined pulse change threshold value, a previous position pulse value, and a previous timer value; reads a current position pulse value from the position register (3) and a current timer value from the timer register (5) in accordance with the emission of the read-enable signal (10) by the velocity calculator (6); sets the pulse change value as the value obtained by subtracting the previous position pulse value from the current position pulse value; sets a timer change value as the value obtained by subtracting the previous timer value from the current timer value; compares the pulse change value with the pulse change threshold value; increments, when the pulse change value is equal to or greater than the pulse change threshold value, the multi-pulse succession number by one to set a new multi-pulse succession number, compares the multi-pulse succession number with a multi-pulse succession number threshold value which is a natural number equal to or greater than two, and divides, when the multi-pulse succession number is equal to or greater than the multi-pulse succession number threshold value, the pulse change value by the timer change value to calculate a position pulse frequency; divides, when the multi-pulse succession number is smaller than the multi-pulse succession number threshold value, the pulse change value by the sampling period to calculate the position pulse frequency; sets, when the pulse change value is smaller than the pulse change threshold value, zero as the multi-pulse succession number, and divides the pulse change value by the sampling period to calculate the position pulse frequency; and sets the previous position pulse value to the current position pulse value, and sets the previous timer value to the current timer value.

4. The motor control device described in Claim 3, wherein the pulse change threshold value is a natural number equal to or greater than two.

**Patentansprüche**

1. Geschwindigkeitserkennungsverfahren unter Verwendung einer Geschwindigkeitserkennungsvorrichtung mit einer Impulserzeugungsschaltung (1) zum Ausgeben eines Positionsimpulses, einem Zähler (2) zum Zählen der Position des Impulses, einem Positionsregister (3) zum Speichern von Positionsinformationen durch Halten des Werts des Zählers, einem Zeitgeber (4), einem Zeitgeberregister (5) zum Speichern des Werts des Zeitgebers (4) auf der Basis des Auf und Ab des Positionsimpulses und einem Geschwindigkeitsrechner (6) zum Berechnen der Geschwindigkeit durch Ausgeben eines Lesefreigabesignals (10), um einen Positionsimpulswert (8) aus dem Positionsregister (3) und einen Zeitgeberwert (11) aus dem Zeitgeberregister (5) zu lesen, wobei das Geschwindigkeitserkennungsverfahren die Geschwindigkeitsberechnungsverarbeitung gemäß einem Verfahren durchführt, das aufweist:

Festlegen von null als Vielimpuls-Folgennummer, welche die Anzahl darstellt, wie oft ein Impulsänderungswert während einer Abtastzeitspanne nacheinander einen vorgegebenen Impulsänderungsschwellwert, einen vorhergehenden Positionsimpulswert und einen vorhergehenden Zeitgeberwert erreicht oder übersteigt;
Lesen eines aktuellen Positionsimpulswerts aus dem Positionsregister und eines aktuellen Zeitgeberwerts aus dem Zeitgeberregister gemäß der Ausgabe des Lesefreigabesignals durch den Geschwindigkeitsrechner;
Festlegen des Impulsänderungswerts als den Wert, der erhalten wird, indem der vorhergehende Positionsimpulswert von dem aktuellen Positionsimpulswert subtrahiert wird;
Festlegen eines Zeitgeberänderungswerts als den Wert, der erhalten wird, indem der vorhergehende Zeitgeberwert von dem aktuellen Zeitgeberwert subtrahiert wird;
Vergleichen des Impulsänderungswerts mit dem Impulsänderungsschwellwert, wobei das Verfahren **dadurch gekennzeichnet ist, dass** es ferner umfasst:

wenn der Impulsänderungswert größer oder gleich dem Impulsänderungsschwellwert ist, Inkrementieren der Vielimpuls-Folgennummer um eins, um eine neue Vielimpuls-Folgennummer festzulegen, Vergleichen der Vielimpuls-Folgennummer mit einem Vielimpuls-Folgennummernschwellwert, der eine natürliche Zahl größer oder gleich zwei ist, und, wenn die Vielimpuls-Folgennummer größer oder gleich dem Vielimpuls-Folgennummernschwellwert ist, Dividieren des Impulsänderungswerts durch den Zeitgeberänderungswert, um eine Positionsimpulsfrequenz zu berechnen;
wenn die Vielimpuls-Folgennummer kleiner oder gleich dem Vielimpuls-Folgennummernschwellwert ist, Dividieren des Impulsänderungswerts durch die Abtastzeitspanne, um die Positionsimpulsfrequenz zu berechnen,
wenn der Impulsänderungswert kleiner als der Impulsänderungsschwellwert ist, Festlegen von null als die Vielphasen-Folgennummer und Dividieren des Impulsänderungswerts durch die Abtastzeitspanne, um die Positionsimpulsfrequenz zu berechnen; und
Festlegen des vorhergehenden Positionsimpulswerts auf den aktuellen Positionsimpulswert und Festlegen des vorhergehenden Zeitgeberwerts auf den aktuellen Zeitgeberwert.

2. Geschwindigkeitserkennungsverfahren nach Anspruch 1,
wobei der Impulsänderungsschwellwert eine natürliche Zahl ist, die größer oder gleich zwei ist.

3. Motorsteuervorrichtung, die aufweist: eine Impulserzeugungsschaltung (1) zum Ausgeben eines Positionsimpulses, einen Zähler (2) zum Zählen der Position des Impulses, ein Positionsregister (3) zum Speichern von Positionsinformationen durch Halten des Werts des Zählers, einen Zeitgeber (4), ein Zeitgeberregister (5) zum Speichern des Werts des Zeitgebers (4) auf der Basis des Auf und Ab des Positionsimpulses und einen Geschwindigkeitsrechner (6) zum Berechnen der Geschwindigkeit durch Ausgeben eines Lesefreigabesignals (10), um einen Positionsimpulswert (8) aus dem Positionsregister (3) und einen Zeitgeberwert (11) aus dem Zeitgeberregister (5) zu lesen, wobei der Geschwindigkeitsrechner (6) null als Vielimpuls-Folgennummer festlegt, welche die Anzahl darstellt, wie oft ein Impulsänderungswert während einer Abtastzeitspanne nacheinander einen vorgegebenen Impulsänderungsschwellwert, einen vorhergehenden Positionsimpulswert und einen vorhergehenden Zeitgeberwert erreicht oder übersteigt, einen aktuellen Positionsimpulswert aus dem Positionsregister (3) und einen aktuellen Zeitgeberwert aus dem Zeitgeberregister (5) gemäß der Ausgabe des Lesefreigabesignals durch den Geschwindigkeitsrechner (6) liest; den Impulsänderungswert als den Wert festlegt, der erhalten wird, indem der vorhergehende Positionsimpulswert von dem aktuellen Positionsimpulswert subtrahiert wird; einen Zeitgeberänderungswert als den Wert festlegt, der erhalten wird, indem der vorhergehende Zeitgeberwert von dem aktuellen Zeitgeberwert subtrahiert wird; den Impulsänderungswert mit dem Impulsänderungsschwellwert vergleicht; wenn der Impulsänderungswert größer oder gleich dem Impulsänderungsschwellwert ist, die Vielimpuls-Folgennummer um eins inkrementiert, um eine neue Vielimpuls-Folgennummer festzulegen, die Vielimpuls-Folgennummer mit einem Vielimpuls-Folgennummernschwellwert, der eine natürliche Zahl größer oder gleich zwei ist, vergleicht und, wenn die Vielimpuls-Folgennummer größer oder gleich dem Vielimpuls-Folgennummernschwellwert ist, den Impulsänderungswert durch den Zeitgeberänderungswert dividiert, um eine Positionsimpulsfrequenz zu berechnen; wenn die Vielimpuls-Folgennummer kleiner oder gleich dem Vielimpuls-Folgennummernschwellwert ist, den Impulsänderungswert durch die Abtastzeitspanne dividiert, um die Positionsimpulsfrequenz zu berechnen; wenn der Impulsänderungswert kleiner als der Impulsänderungsschwellwert ist, null als die Vielphasen-Folgennummer festlegt und den Impulsänderungswert durch die Abtastzeitspanne dividiert, um die Positionsimpulsfrequenz zu berechnen; und den vorhergehenden Positionsimpulswert auf den aktuellen Positionsimpulswert festlegt und den vorhergehenden Zeitgeberwert auf den aktuellen Zeitgeberwert festlegt.

4. Motorsteuervorrichtung nach Anspruch 3, wobei der Impulsänderungsschwellwert eine natürliche Zahl größer oder gleich zwei ist.

## Revendications

1. Procédé de détection de vitesse utilisant un dispositif de détection de vitesse comportant un circuit générateur d'impulsion (1) destiné à délivrer une impulsion de position, un compteur (2) destiné à compter l'impulsion de position, un registre de position (3) destiné à mémoriser des informations de position en bloquant la valeur du compteur (2), un générateur d'horloge (4), un registre d'horloge (5) destiné à mémoriser la valeur du générateur d'horloge (4) sur la base des fronts montants et descendants de l'impulsion de position, et un calculateur de vitesse (6) destiné à calculer la vitesse en émettant un signal de validation de lecture (10) afin de lire une valeur d'impulsion de position (8) à partir du registre de position (3) et une valeur de temps (11) à partir du registre d'horloge (5), le procédé de détection de vitesse exécutant un traitement de calcul de vitesse selon une procédure comprenant :

le positionnement à zéro d'un nombre consécutif d'impulsions multiples représentant le nombre par lequel une valeur de variation d'impulsion au cours d'une période d'échantillonnage atteint ou dépasse successivement une valeur de seuil de variation d'impulsion prédéterminée, d'une valeur d'impulsion de position précédente, et d'une valeur de temps précédente ;
la lecture d'une valeur d'impulsion de position courante à partir du registre de position et d'une valeur de temps courante à partir du registre d'horloge en fonction de l'émission du signal de validation de lecture par le calculateur de vitesse ;
le positionnement de la valeur de variation d'impulsion en tant que la valeur obtenue par soustraction de la valeur d'impulsion de position précédente à partir de la valeur d'impulsion de position courante ;
le positionnement d'une valeur de variation de temps en tant que la valeur obtenue par soustraction de la valeur de temps précédente à partir de la valeur de temps courante ;
la comparaison de la valeur de variation d'impulsion avec la valeur de seuil de variation d'impulsion, le procédé étant **caractérisé par le fait qu'**il comprend, en outre :

l'incrémentation, lorsque la valeur de variation d'impulsion est supérieure ou égale à la valeur de seuil de variation d'impulsion, du nombre consécutif d'impulsions multiples de un afin de définir un nouveau nombre consécutif d'impulsions multiples, la comparaison du nombre consécutif d'impulsions multiples à une valeur de seuil de nombre consécutif d'impulsions multiples qui est un nombre entier supérieur ou égal à deux, et la division, lorsque le nombre consécutif d'impulsions multiples est supérieur ou égal à la valeur de seuil de nombre consécutif d'impulsions multiples, de la valeur de variation d'impulsion par la valeur de variation de temps afin de calculer une fréquence d'impulsion de position ;

la division, lorsque le nombre consécutif d'impulsions multiples est inférieur à la valeur de seuil de nombre consécutif d'impulsions multiples, de la valeur de variation d'impulsion par la période d'échantillonnage afin de calculer la fréquence d'impulsion de position ;

le positionnement, lorsque la valeur de variation d'impulsion est inférieure à la valeur de seuil de variation d'impulsion, à zéro du nombre consécutif d'impulsions multiples, et la division de la valeur de variation d'impulsion par la période d'échantillonnage afin de calculer la fréquence d'impulsion de position ; et

le positionnement de la valeur d'impulsion de position précédente à la valeur d'impulsion de position courante, et le positionnement de la valeur de temps précédente à la valeur de temps courante.

2. Procédé de détection de vitesse selon la revendication 1, dans lequel la valeur de seuil de variation d'impulsion est un nombre entier supérieur ou égal à deux.

3. Dispositif de commande de moteur comprenant un circuit générateur d'impulsion (1) destiné à délivrer une impulsion de position, un compteur (2) destiné à compter l'impulsion de position, un registre de position (3) destiné à mémoriser les informations de position en bloquant la valeur du compteur (2), un générateur d'horloge (4), un registre d'horloge (5) destiné à mémoriser la valeur de générateur d'horloge (4) sur la base des fronts montants et descendants de l'impulsion de position, et un calculateur de vitesse (6) destiné à calculer la vitesse par émission d'un signal de validation de lecture (10) afin de lire une valeur d'impulsion de position (8) à partir du registre de position (3) et une valeur de temps (11) à partir du registre d'horloge (5),

dans lequel le calculateur de vitesse (6) positionne à zéro un nombre consécutif d'impulsions multiples représentant le nombre par lequel une valeur de variation d'impulsion au cours d'une période d'échantillonnage atteint ou dépasse successivement une valeur de seuil de variation d'impulsion prédéterminée, une valeur d'impulsion de position précédente, et une valeur de temps précédente ; lit une valeur d'impulsion de position courante à partir du registre de position (3) et une valeur de temps courante à partir du registre d'horloge (5) en fonction de l'émission du signal de validation de lecture (10) par le calculateur de vitesse (6) ; positionne la valeur de variation d'impulsion en tant que la valeur obtenue par soustraction de la valeur d'impulsion de position précédente à partir de la valeur d'impulsion de position courante ; positionne une valeur de variation de temps en tant que la valeur obtenue par soustraction de la valeur de temps précédente à partir de la valeur de temps courante ; compare la valeur de variation d'impulsion à la valeur de seuil de variation d'impulsion ; incrémente, lorsque la valeur de variation d'impulsion est supérieure ou égale à la valeur de seuil de variation d'impulsion, le nombre consécutif d'impulsions multiples de un afin de définir un nouveau nombre consécutif d'impulsions multiples, compare le nombre consécutif d'impulsions multiples à une valeur de seuil de nombre consécutif d'impulsions multiples qui est un nombre entier supérieur ou égal à deux, et divise, lorsque le nombre consécutif d'impulsions multiples est supérieur ou égal à la valeur de seuil de nombre consécutif d'impulsions multiples, la valeur de variation d'impulsion par la valeur de variation de temps afin de calculer une fréquence d'impulsion de position ; divise, lorsque le nombre consécutif d'impulsions multiples est inférieur à la valeur de seuil de nombre consécutif d'impulsions multiples, la valeur de variation d'impulsion par la période d'échantillonnage afin de calculer la fréquence d'impulsion de position ; positionne, lorsque la valeur de variation d'impulsion est inférieure à la valeur de seuil de variation d'impulsion, à zéro le nombre consécutif d'impulsions multiples, et divise la valeur de variation d'impulsion par la période d'échantillonnage afin de calculer la fréquence d'impulsion de position ; puis positionne la valeur d'impulsion de position précédente à la valeur d'impulsion de position courante, et positionne la valeur de temps précédente à la valeur de temps courante.

4. Dispositif de commande de moteur selon la revendication 3, dans lequel la valeur de seuil de variation d'impulsion est un nombre entier supérieur ou égal à deux.

# FIG. 1

## FIG. 2

## FIG. 3

(a)

(b)

$\Delta n(k)$  
$n(k)$  
$n(k-1)$

(c)

LATCHED VALUE
OF TIMER
RESISTOR

$t(k)$  
$\Delta t(k)$  
$t(k-1)$

(d)

CALCULATED
VELOCITY

$f(k)$

(e)

T    T    T

## FIG. 4

Legend:
— ACTUAL VELOCITY
---- DETECTED VELOCITY OBTAINED BY PERIOD MEASUREMENT METHOD
······ DETECTED VELOCITY OBTAINED BY PULSE COUNTING METHOD

VELOCITY (pulse/T)

SAMPLING NUMBER

## FIG. 5

Legend:
— ACTUAL VELOCITY
······ DETECTED VELOCITY OBTAINED BY PULSE COUNTING METHOD

VELOCITY (pulse/T)

SAMPLING NUMBER

## FIG. 6

ACTUAL VELOCITY $V_{Motor}$

DETECTED VELOCITY $V_{Cal}$ OBTAINED BY METHOD ACCORDING TO PRESENT INVENTION

AVERAGE VALUE $V_{Ave}$ OF DETECTED VELOCITIES OBTAINED BY METHOD ACCORDING TO PRESENT INVENTION (VALUE OBTAINED BY PASSING $V_{Cal}$ THROUGH LOW-PASS FILTER)

DETECTED VELOCITY OBTAINED BY PULSE COUNTING METHOD

## FIG. 7

ACTUAL VELOCITY $V_{Motor}$

DETECTED VELOCITY $V_{Cal}$ OBTAINED BY METHOD ACCORDING TO PRESENT INVENTION

AVERAGE VALUE $V_{Ave}$ OF DETECTED VELOCITIES OBTAINED BY METHOD ACCORDING TO PRESENT INVENTION (VALUE OBTAINED BY PASSING $V_{Cal}$ THROUGH LOW-PASS FILTER)

DETECTED VELOCITY OBTAINED BY PULSE COUNTING METHOD

**EP 2 177 917 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0476478 A2
- DE 3234575 A1
- US 4257005 A
- JP 5215758 A